# FASCICULE DE BREVET EUROPEEN

(11) **EP 4 450 313 B1**
(45) Date de publication et mention de la délivrance du brevet: **18.02.2026**
(21) Numéro de dépôt: 24165400.3
(22) Date de dépôt: 22.03.2024
(51) Int. Cl.: B60K 15/03, B65D 90/22

(54) **DISPOSITIF D'ATTACHE DE PLAQUES AUTO-OBTURANTES CONTRE LA PAROI EXTERNE D'UN RÉSERVOIR, ENSEMBLE MUNI D'UN TEL DISPOSITIF D'ATTACHE ET PROCÉDÉ DE MONTAGE ASSOCIÉ**
VORRICHTUNG ZUM BEFESTIGEN VON SELBSTDICHTENDEN PLATTEN GEGEN DIE AUSSENWAND EINES BEHÄLTERS, ANORDNUNG MIT EINER SOLCHEN BEFESTIGUNGSVORRICHTUNG UND MONTAGEVERFAHREN DAFÜR
DEVICE FOR ATTACHING SELF-SEALING PLATES TO THE OUTER WALL OF A TANK, ASSEMBLY PROVIDED WITH SUCH AN ATTACHMENT DEVICE AND ASSOCIATED MOUNTING METHOD

(30) Priorité: 24.03.2023 FR 2302844; 27.07.2023 FR 2308103
(43) Date de publication de la demande: 23.10.2024
(73) Titulaire: HUTCHINSON, 75008 Paris (FR)
(72) Inventeur: CLEDAT, Johan, 60660 MELLO (FR); IKHMOUCHEN, Youssef, 95540 MERY SUR OISE (FR)
(74) Mandataire: Gevers & Orès

(56) Documents cités:
- CN-A- 108 290 496
- CN-A- 109 562 689
- DE-A1- 102020 134 643
- US-A- 2 712 326
- US-A1- 2012 181 207

## Description

### Domaine Technique

L'invention concerne le domaine des réservoirs munis de plaques auto-obturantes. De tels réservoirs sont en particulier utilisés dans le secteur de la Défense. L'invention concerne plus précisément un dispositif d'attache de telles plaques auto-obturantes contre la paroi externe du réservoir.

### Art Antérieur

On connaît de longue date des réservoirs, typiquement des réservoirs d'essence, munis sur leur paroi externe de plaques remplies d'un matériau auto-obturant. Lorsqu'un projectile impacte le réservoir en ayant donc traversé une plaque remplie de matériau auto-obturant, ce matériau vient boucher naturellement l'orifice formé par la projectile pour limiter voire stopper toute fuite.

Ces plaques sont généralement collées sur la paroi externe du réservoir. A cet égard, on pourra par exemple se référer au document FR 3 001 410 A1 qui propose une enveloppe auto-obturante, susceptible de se présenter sous forme de plaques remplies du matériau auto-obturant, qui est en pratique collée sur la paroi externe du réservoir.

Ce collage, s'il permet un montage et un maintien du matériau auto-obturant contre la paroi externe du réservoir, pose une difficulté si l'on souhaite récupérer le seul réservoir, par exemple pour le réutiliser après réparation ou non en fonction de son état ou simplement pour valoriser les matériaux dont il est constitué, qui sont généralement des matériaux métalliques.

C'est en effet souvent difficile et chronophage.

Certains ont proposé des moyens de montage amovibles pour des plaques de matériau auto-obturant. On pourra se référer à la solution proposée dans US 5,383,567A. Dans ce document, on propose un caisson rigide pour envelopper le matériau auto-obturant placé contre le réservoir, le caisson comportant deux parties qui peuvent être attachées l'une à l'autre. Cette solution nécessite un caisson fabriqué pour le réservoir concerné, sur mesure. Par ailleurs, cela implique une masse importante et est donc peu utilisable pour un réservoir de véhicule.

D'autres dispositifs existent tels que ceux décrits dans les documents DE-A1-102020134643, CN-A-109562689, US-A-2712326, US-A1-2012/181207 ou CN-A-108290496.

### Résumé de l'invention

Un objectif de l'invention est de résoudre l'un au moins des inconvénients ci-dessus. Pour atteindre l'un au moins de ces objectifs, l'invention propose un dispositif d'attache de plaques auto-obturantes contre une paroi externe d'un réservoir, ledit dispositif d'attache comprenant :
- une partie conformable à la forme desdites plaques auto-obturantes, ladite partie comportant une première extrémité et une deuxième extrémité opposée à la première extrémité,
- une pluralité de sangles comportant chacune une première extrémité de sangle et une deuxième extrémité de sangle opposée à la première extrémité de sangle,
- un premier moyen de connexion entre les sangles et la partie conformable, ledit premier moyen de connexion connectant les différentes premières extrémités de sangle à la première extrémité de la partie conformable, et
- un deuxième moyen de connexion entre les sangles et la partie conformable, ledit deuxième moyen de connexion connectant les différentes deuxièmes extrémités de sangle à la deuxième extrémité de la partie conformable.

Le dispositif selon l'invention pourra comprendre l'une au moins des caractéristiques suivantes, prise seule ou en combinaison :
- chaque moyen de connexion entre les sangles et la partie conformable se présente sous la forme d'une barre s'étendant le long de tout l'extrémité de la partie conformable et sur laquelle les différentes extrémités de sangle sont montées ;
- le premier moyen de connexion comprend une première barre de maintien pour ladite partie conformable et une première barre de connexion pour les sangles sur laquelle toutes les premières extrémités de sangle sont montées et, une première plaque munie de deux guides longitudinaux parallèles l'un à l'autre, un premier guide longitudinal de la première plaque recevant la première barre de maintien pour ladite partie conformable et un deuxième guide longitudinal de la première plaque recevant la première barre de connexion desdites sangles, et le deuxième moyen de connexion comprend une deuxième barre de maintien pour ladite partie conformable, une deuxième barre de connexion pour les sangles sur laquelle toutes les deuxièmes extrémités de sangle sont montées et une deuxième plaque également munie de deux guides longitudinaux parallèles l'un à l'autre, un premier guide longitudinal de la deuxième plaque recevant la deuxième barre de maintien pour ladite partie conformable et un deuxième guide longitudinal de la deuxième plaque recevant la deuxième barre de connexion desdites sangles ;
- les barres de maintien, les barres de connexion et les guides longitudinaux présentent tous une section de forme circulaire ;
- les barres de connexion des sangles sont faites d'un matériau métallique ;
- les plaques sont faites d'un matériau métallique ;
- les barres de maintien de la partie conformable sont faites d'un matériau métallique ;
- ladite partie conformable est choisie parmi : une toile, un film réalisé avec un matériau plastique plein ou une toile recouverte d'un matériau plastique plein, par exemple du tarpe.

L'invention concerne aussi un ensemble comprenant un réservoir, par exemple apte à contenir de l'essence, une pluralité de plaques auto-obturantes jointives et un dispositif d'attache selon l'invention, lesdites plaques étant montées contre une paroi externe du réservoir au moyen dudit dispositif d'attache.

L'invention concerne également un procédé de montage d'un ensemble selon l'invention, ledit procédé comprenant les étapes suivantes :
a) placer les plaques auto-obturantes de manière jointive contre le réservoir,
b) monter le dispositif d'attache autour desdites plaques auto-obturantes,
c) serrer les sangles du dispositif d'attache afin de maintenir les plaques auto-obturantes contre la paroi externe du réservoir.

### Brève description des figures

la [Fig. 1] est un schéma selon une vue en perspective d'un dispositif d'attache conforme à l'invention selon un mode de réalisation, avant d'être monté autour de plaques auto-obturantes pour les maintenir contre un réservoir ;
la [Fig. 2] représente le dispositif d'attache de la [Fig. 1], seul, lorsqu'il est monté autour des plaques auto-obturantes qu'il maintient contre le réservoir;
la [Fig. 3] est une vue agrandie sur une partie du dispositif d'attache représenté sur la [Fig. 2];
la [Fig. 4] est une vue partielle, à savoir sans les sangles et sans la partie conformable du dispositif d'attache selon l'invention tel qu'agrandi sur la [Fig. 3] ;
la [Fig. 5] est une vue de côté de la vue partielle de la [Fig. 4], représentant un moyen de connexion entre des sangles et une partie conformable du dispositif d'attache de la [Fig. 1] ainsi que de son environnement immédiat ;
la [Fig. 6] est une vue de côté d'un autre moyen de connexion entre les sangles et la partie conformable du dispositif d'attache de la [Fig. 1] et de son environnement immédiat ;
la [Fig. 7] est une vue en coupe partielle d'un ensemble comportant un réservoir, en l'occurrence de forme cylindrique, des plaques auto-obturantes et un dispositif d'attache conforme au mode de réalisation de l'invention de la [Fig. 1] pour maintenir lesdites plaques contre la paroi externe du réservoir ;
la [Fig. 8] est une variante de réalisation du moyen de connexion entre les sangles et la partie confirmable d'un dispositif d'attache selon l'invention ; et
la [Fig. 9] est une variante de réalisation d'un dispositif d'attache selon l'invention adapté pour un réservoir en forme de dôme ou de demi-dôme.

### Description détaillée

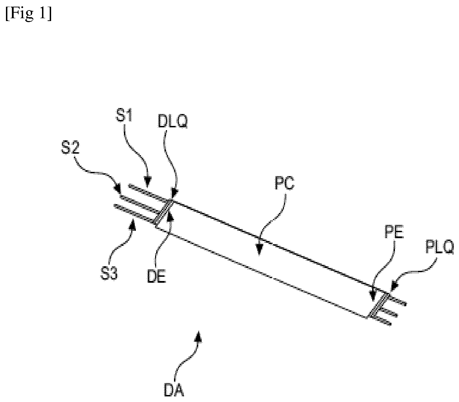

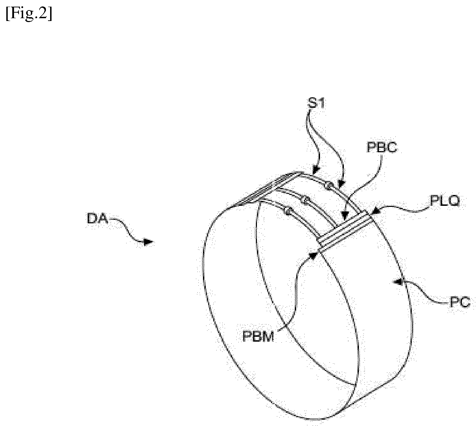

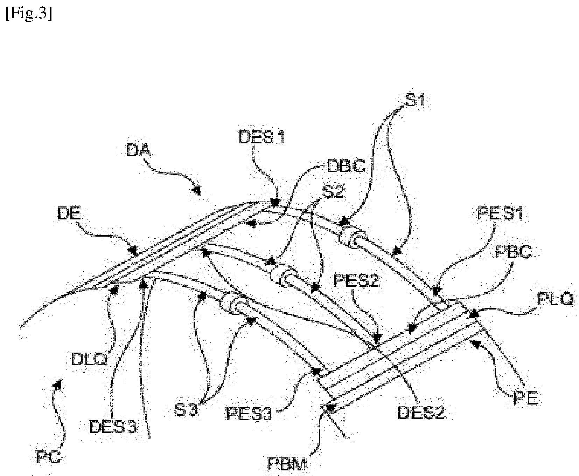

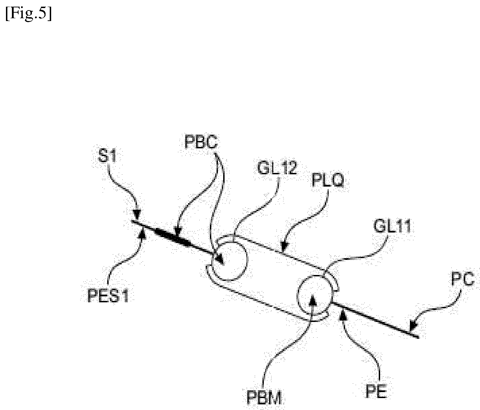

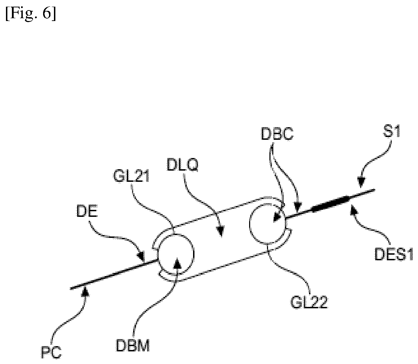

Nous allons tout d'abord décrire le dispositif d'attache DA de plaques auto-obturantes contre un réservoir selon un mode de réalisation de l'invention à l'appui des figures 1 à 7.

Le dispositif d'attache DA comporte une partie conformable PC à la forme des plaques auto-obturantes PAO. Cette partie étant conformable, elle est en pratique particulièrement souple pour s'adapter à toute forme envisageable pour un réservoir ; la forme du réservoir imprimant en effet celle des plaques auto-obturantes qui doivent épouser la forme de la paroi externe du réservoir.

La partie conformable PC comporte une première extrémité PE ainsi qu'une deuxième extrémité DE, opposée à la première extrémité. La partie conformable PC est délimitée au niveau de sa première extrémité PE et sa deuxième extrémité DE respectivement par une première barre de maintien PBM pour la partie conformable PC et une deuxième barre de maintien DBM pour la partie conformable PC.

Le dispositif d'attache DA comporte donc aussi des barres de maintien PBM, DBM. Les barres de maintien PBM, DBM sont de fait rigides par rapport à la partie conformable PC. Elles peuvent notamment être faites d'un matériau métallique.

La partie conformable PC du dispositif d'attache DA peut être une toile, un film réalisé en un matériau plastique plein ou une toile recouverte d'un matériau plastique plein, par exemple du tarpe. Le matériau employé est évidemment bien plus léger que celui consistant à utiliser une solution de type caisson rigide (métallique). Cette partie conformable PC a par ailleurs l'avantage d'être aisément adaptable à tous types de réservoirs. Il suffit par exemple de définir les dimensions nécessaires au réservoir considéré, par exemple à partir d'un rouleau de tarpe, de le couper puis d'insérer les extrémités de la découpe dans les barres de maintien. C'est beaucoup plus simple qu'avec un solution de type caisson rigide.

Ces barres de maintien PBM, DBM sont destinées à interagir avec une plaque PLQ, DLQ qui est décrite de façon plus détaillée par la suite.

Le dispositif d'attache DA comporte également une pluralité de sangles S1, S2, S3. Ces sangles S1, S2, S3 sont en l'occurrence agencées parallèlement dans le présent mode de réalisation du fait que le dispositif d'attache DA est ici destiné à être installé sur un réservoir cylindrique (cf. figures 1 à 3 et figure 7).

Chaque sangle S1, S2, S3 comporte une première extrémité PES1, PES2, PES3 de sangle ainsi qu'une deuxième extrémité DES1, DES2, DES3 de sangle, opposée à la première extrémité PES1, PES2, PES3 de sangle. Les différentes premières extrémités de sangle sont toutes reliées à une même première barre de connexion PBC desdites sangles. De même, les différentes deuxièmes extrémités de sangle sont toutes reliées à une même deuxième barre de connexion DBC desdites sangles.

Le dispositif d'attache DA comporte donc aussi les barres de connexion PBC, DBC desdites sangles. Ces barres de connexion PBC, DBC sont de fait rigides, comme le sont les barres de maintien PBM, DBM décrites précédemment. Ces barres de connexion PBC, DBC peuvent en particulier être faites d'un matériau métallique.

Le dispositif d'attache DA comporte également les plaques PLQ, DLQ qui ont été brièvement décrites précédemment. Ces plaques sont de fait rigides comme le sont les barres de maintien PBM, DBM décrites précédemment.

Ainsi, le dispositif d'attache DA comporte plus précisément une première plaque PLQ qui est munie de deux guides longitudinaux GL11, GL12 parallèles l'un à l'autre. Un premier guide longitudinal GL11 de la première plaque PLQ est destiné à recevoir la première barre de maintien PBM liée à la ladite partie conformable PC. Un deuxième guide longitudinal GL12 de la première plaque PLQ est quant à lui destiné à recevoir la première barre de connexion PBC desdites sangles S1, S2, S3.

Ainsi également, le dispositif d'attache DA comporte plus précisément une deuxième plaque DLQ également munie de deux guides longitudinaux GL21, GL22 parallèles l'un à l'autre. Un premier guide longitudinal GL21 de la deuxième plaque DLQ est destiné à recevoir la deuxième barre de maintien DBM liée à ladite partie conformable PC. Un deuxième guide longitudinal GL22 de la deuxième plaque DLQ est quant à lui destiné à recevoir la deuxième barre de connexion DBC desdites sangles S1, S2, S3. En pratique, les deux plaques PLQ, DLQ sont d'ailleurs avantageusement identiques. Les plaques PLQ, DLQ peuvent notamment être faites en un matériau métallique.

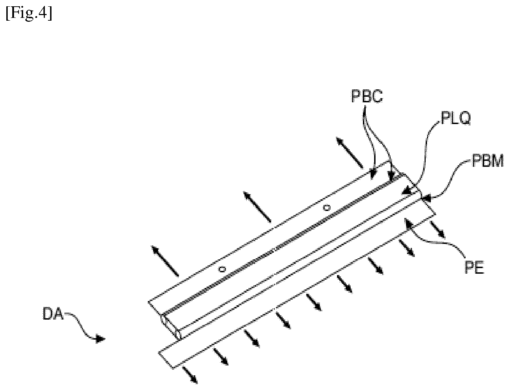

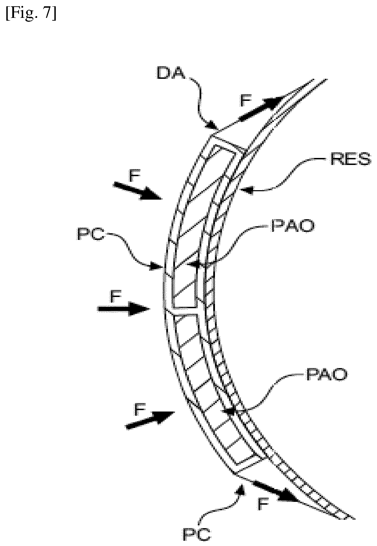

Avec le dispositif d'attache DA selon l'invention, chaque plaque PLQ, DLQ permet alors de répartir une tension appliquée par les sangles S1, S2, S3 qui est ponctuelle au niveau des extrémités desdites sangles en une tension appliquée continûment et de manière homogène sur les extrémités PE, DE de la partie conformable PC. On peut visualiser cet effet avec les flèches représentées sur la figure 4 (partie supérieure : 3 flèches représentant les tensions imprimées par les sangles ; partie inférieure : effet du côté de la partie conformable PC). La tension finalement appliquée par le dispositif d'attache DA sur les plaques auto-obturantes PAO est quant à lui visible sur la figure 7. Les plaques auto-obturantes sont alors parfaitement maintenues contre la paroi externe du réservoir et peuvent donc remplir leur fonction en cas d'impact d'une balle par exemple venant percer le réservoir RES.

Avantageusement également, les barres de maintien PBM, DBM, les barres de connexion PBC, DBC ainsi que les guides longitudinaux GL11, GL12, GL21, GL22 des plaques PLQ, DLQ présentent tous une section de forme circulaire. Il définit alors au sein de chaque guide longitudinal GL11, GL12, GL21, GL22 une liaison pivot offrant 1 degré de liberté en rotation entre la partie conformable PC et chaque plaque PLQ, DLQ, mais aussi entre les sangles S1, S2, S3 et chaque plaque PLQ, DLQ. Ainsi, lors du serrage des sangles, on facilite la mise en tension de la partie conformable et par suite, une mise sous pression uniforme des différentes plaques auto-obturantes contre le réservoir.

Dans la description qui précède, il convient de noter que la première barre de maintien PBM pour la partie conformable PC, la première barre de connexion PBC pour les sangles S1, S2, S3 et la première plaque PLQ forment ensemble un premier moyen de connexion MAR1 entre les sangles S1, S2, S3 et la partie conformable PC. De même, la deuxième barre de maintien DBM pour la partie confirmable PC, la deuxième barre de connexion DBC pour les sangles S1, S2, S3 et la deuxième plaque DLQ forment ensemble un deuxième moyen de connexion MAR2 entre les sangles S1, S2, S3 et la deuxième plaque DLQ.

Dans une variante de réalisation, il est envisageable de prévoir une autre conception pour chacun des moyen de connexion MAR1, MAR2.

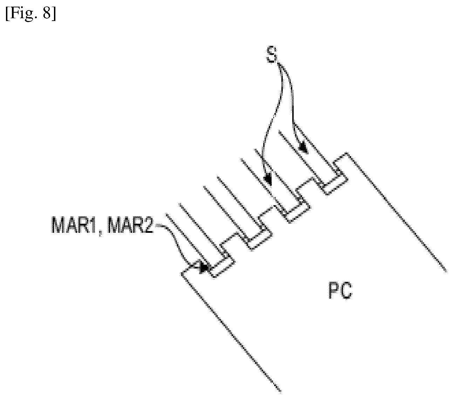

Ainsi, et comme cela est représenté sur la figure 8, chaque moyen de connexion MAR1, MAR2 entre les sangles S1, S2, S3 et la partie conformable PC peut se présenter sous la forme d'une barre s'étendant le long de toute l'extrémité de la partie conformable PC et sur laquelle les différentes extrémités de sangle sont montées. Cette barre reçoit alors à la fois les extrémités de chacune des sangles et l'extrémité de la partie conformable PC. Pour ce faire, l'extrémité de la partie conformable PC présente une série de zones de contact avec la barre venant localement en excroissance. La barre permet de répartir la tension appliquée par les sangles S1, S2, S3 qui est ponctuelle au niveau des extrémités desdites sangles en une tension appliquée continûment et de manière relativement homogène sur les extrémités PE, DE de la partie conformable PC. La barre peut être de forme cylindrique ou autre. La barre peut être réalisée en un matériau métallique.

Par ailleurs, dans l'exemple de réalisation discuté à l'appui des figures 1 à 7, nous avons présenté un dispositif d'attache DA adapté pour un réservoir de forme cylindrique. Le réservoir peut prendre bien d'autres formes et de ce fait on peut avoir besoin de maintenir en position des plaques auto-obturantes sur des formes de réservoir bien différentes.

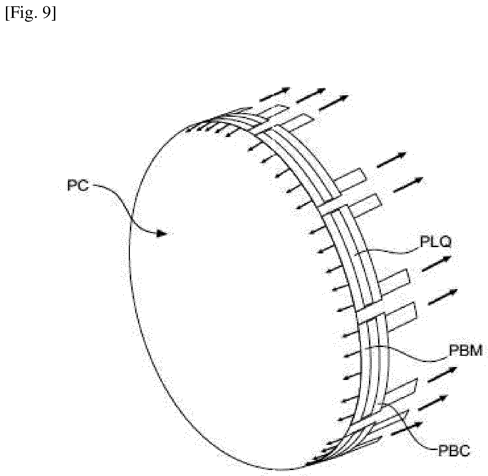

On a par exemple représenté sur la figure 9 un cas où le dispositif d'attache conforme à l'invention vise à maintenir en position des plaques auto-obturantes contre une forme de réservoir en dôme ou demi-dôme. Dans le cas d'espèce, le moyen de connexion MAR est du type décrit à l'appui des figures 1 à 7, à savoir avec une plaque PLQ. Bien entendu, on peut tout à fait envisager un moyen de connexion MAR confirme à celui qui a été décrit à l'appui de la figure 8.

L'invention concerne aussi un ensemble ENS comprenant un réservoir RES, par exemple apte à contenir de l'essence, une pluralité de plaques auto-obturantes PAO jointives et un dispositif d'attache DA confirme à l'invention, lesdites plaques auto-obturantes PAO étant montées contre une paroi externe PEXT du réservoir au moyen du dispositif d'attache DA.

L'invention concerne enfin un procédé de montage d'un ensemble ENS tel que décrit précédemment, ledit procédé comprenant les étapes suivantes :
a) placer les plaques auto-obturantes PAO de manière jointive contre le réservoir RES,
b) monter le dispositif d'attache DA autour desdites plaques auto-obturantes PAO, et
c) serrer les sangles S1, S2, S3 du dispositif d'attache DA afin de maintenir les plaques auto-obturantes contre la paroi externe du réservoir.

Les plaques peuvent par exemple présenter effet collant pour assurer un maintien en place contre le réservoir avant que le dispositif d'attache ne soit monté et les sangles serrées.

## Revendications

1. Dispositif d'attache (DA) de plaques auto-obturantes contre une paroi externe d'un réservoir, ledit dispositif d'attache comprenant :
- une pluralité de sangles (S1, S2, S3) comportant chacune une première extrémité (PES1) de sangle et une deuxième extrémité (DES1, DES2, DES3) de sangle opposée à la première extrémité de sangle,
**caractérisé en ce que** ledit dispositif comprend :
- une partie conformable (PC) à la forme desdites plaques auto-obturantes, ladite partie comportant une première extrémité (PE) et une deuxième extrémité (DE) opposée à la première extrémité,
- un premier moyen de connexion (MAR1) entre les sangles (S1, S2, S3) et la partie conformable (PC), ledit premier moyen de connexion (MAR1) connectant les différentes premières extrémités de sangle à la première extrémité de la partie conformable (PC) ; et
- un deuxième moyen de connexion (MAR2) entre les sangles (S1, S2, S3) et la partie conformable (PC), ledit deuxième moyen de connexion (MAR2) connectant les différentes deuxièmes extrémités de sangle à la deuxième extrémité de la partie conformable (PC).

2. Dispositif d'attache selon la revendication 1, dans lequel chaque moyen de connexion entre les sangles (S1, S2, S3) et la partie conformable (PC) se présente sous la forme d'une barre (BAR) s'étendant le long de tout l'extrémité de la partie confirmable et sur laquelle les différentes extrémités de sangle sont montées.

3. Dispositif d'attache selon la revendication 1, dans lequel :
- le premier moyen de connexion (MAR1) comprend une première barre de maintien (PBM) pour ladite partie conformable (PC) et une première barre de connexion (PBC) pour les sangles (S1, S2, S3) sur laquelle toutes les premières extrémités de sangle sont montées et, une première plaque (PLQ) munie de deux guides longitudinaux (GL11, GL12) parallèles l'un à l'autre, un premier guide longitudinal (GL11) de la première plaque recevant la première barre de maintien (PBM) pour ladite partie conformable (PC) et un deuxième guide longitudinal (GL12) de la première plaque (PLQ) recevant la première barre de connexion (PBC) desdites sangles (S1, S2, S3), et
- le deuxième moyen de connexion (MAR2) comprend une deuxième barre de maintien (DBM) pour ladite partie conformable (PC), une deuxième barre de connexion (DBC) pour les sangles (S1, S2, S3) sur laquelle toutes les deuxièmes extrémités de sangle sont montées et une deuxième plaque (DLQ) également munie de deux guides longitudinaux (GL21, GL22) parallèles l'un à l'autre, un premier guide longitudinal (GL21) de la deuxième plaque (DLQ) recevant la deuxième barre de maintien (DBM) pour ladite partie conformable et un deuxième guide longitudinal (GL22) de la deuxième plaque recevant la deuxième barre de connexion (DBC) desdites sangles (S1, S2, S3).

4. Dispositif d'attache (DA) selon la revendication 3, dans lequel les barres de maintien (PBM, DBM), les barres de connexion (PBC, DBC) et les guides longitudinaux (GL11, GL12 ; GL21, GL22) présentent tous une section de forme circulaire.

5. Dispositif d'attache (DA) selon l'une des revendications 3 ou 4, dans lequel les barres de connexion (PBC, DBC) des sangles sont faites d'un matériau métallique.

6. Dispositif d'attache (DA) selon l'une des revendications 3 à 5, dans lequel les plaques (PLQ, DLQ) sont faites d'un matériau métallique.

7. Dispositif d'attache (DA) selon l'une des revendications 3 à 6, dans lequel les barres de maintien (PBM, DBM) de la partie conformable (PC) sont faites d'un matériau métallique.

8. Dispositif d'attache (DA) selon l'une des revendications précédentes, dans lequel ladite partie conformable est choisie parmi : une toile, un film réalisé avec un matériau plastique plein ou une toile recouverte d'un matériau plastique plein, par exemple du tarpe.

9. Ensemble (ENS) comprenant un réservoir (RES), par exemple apte à contenir de l'essence, une pluralité de plaques auto-obturantes (PAO) jointives et un dispositif d'attache (DA) selon l'une des revendications précédentes, lesdites plaques étant montées contre une paroi externe (PEXT) du réservoir au moyen dudit dispositif d'attache.

10. Procédé de montage d'un ensemble (ENS) selon la revendication précédente, ledit procédé comprenant les étapes suivantes :
a) placer les plaques auto-obturantes (PAO) de manière jointive contre le réservoir (RES),
b) monter le dispositif d'attache (DA) autour desdites plaques auto-obturantes (PAO),
c) serrer les sangles (S1, S2, S3) du dispositif d'attache (DA) afin de maintenir les plaques auto-obturantes contre la paroi externe du réservoir.

## Patentansprüche

1. Befestigungsvorrichtung (DA) von selbstdichtenden Platten an einer Außenwand eines Behälters, wobei die Befestigungsvorrichtung umfasst:
- eine Vielzahl von Gurten (S1, S2, S3), die jeweils ein erstes Gurtende (PES1) und ein dem ersten Gurtende gegenüberliegendes zweites Gurtende (DES1, DES2, DES3) beinhaltet,
**dadurch gekennzeichnet, dass** die Vorrichtung umfasst:
- einen der Form der selbstdichtenden Platten anpassbaren Teil (PC), wobei der Teil ein erstes Ende (PE) und ein dem ersten Ende gegenüberliegendes zweites Ende (DE) beinhaltet,
- ein erstes Verbindungsmittel (MAR1) zwischen den Gurten (S1, S2, S3) und dem anpassbaren Teil (PC), wobei das erste Verbindungsmittel (MAR1) die verschiedenen ersten Gurtenden mit dem ersten Ende des anpassbaren Teils (PC) verbindet; und
- ein zweites Verbindungsmittel (MAR2) zwischen den Gurten (S1, S2, S3) und dem anpassbaren Teil (PC), wobei das zweite Verbindungsmittel (MAR2) die verschiedenen zweiten Gurtenden mit dem zweiten Ende des anpassbaren Teils (PC) verbindet.

2. Befestigungsvorrichtung nach Anspruch 1, wobei sich jedes Verbindungsmittel zwischen den Gurten (S1, S2, S3) und dem anpassbaren Teil (PC) in der Form einer Stange (BAR) präsentiert, die sich entlang des gesamten Endes des anpassbaren Teils erstreckt, und auf der die verschiedenen Gurtenden montiert sind.

3. Befestigungsvorrichtung nach Anspruch 1, wobei:
- das erste Verbindungsmittel (MAR1) eine erste Haltestange (PBM) für den anpassbaren Teil (PC) und eine erste Verbindungsstange (PBC) für die Gurte (S1, S2, S3), auf der alle ersten Gurtenden montiert sind, und, eine erste Platte (PLQ), die mit zwei parallel zueinander verlaufenden Längsführungen (GL11, GL12) versehen ist, umfasst, wobei eine erste Längsführung (GL11) der ersten Platte die erste Haltestange (PBM) für den anpassbaren Teil (PC) aufnimmt und eine zweite Längsführung (GL12) der ersten Platte (PLQ) die erste Verbindungsstange (PBC) der Gurte (S1, S2, S3) aufnimmt, und
- das zweite Verbindungsmittel (MAR2) eine zweite Haltestange (DBM) für den anpassbaren Teil (PC), eine zweite Verbindungsstange (DBC) für die Gurte (S1, S2, S3), auf der alle zweiten Gurtenden montiert sind, und eine zweite Platte (DLQ), die ebenfalls mit zwei parallel zueinander verlaufenden Längsführungen (GL21, GL22) versehen ist, umfasst, wobei eine zweite Längsführung (GL21) der ersten Platte die zweite Haltestange (DBM) für den anpassbaren Teil aufnimmt und eine zweite Längsführung (GL22) der zweiten Platte die zweite Verbindungsstange (DBC) der Gurte (S1, S2, S3) aufnimmt.

4. Befestigungsvorrichtung (DA) nach Anspruch 3, wobei die Haltestangen (PBM, DBM), die Verbindungsstangen (PBC, DBC) und die Längsführungen (GL11, GL12 ; GL21, GL22) alle einen Querschnitt in Kreisform aufweisen.

5. Befestigungsvorrichtung (DA) nach einem der Ansprüche 3 oder 4, wobei die Verbindungsstangen (PBC, DBC) der Gurte aus einem metallischen Werkstoff gefertigt sind.

6. Befestigungsvorrichtung (DA) nach einem der Ansprüche 3 bis 5, wobei die Platten (PLQ, DLQ) aus einem metallischen Werkstoff gefertigt sind.

7. Befestigungsvorrichtung (DA) nach einem der Ansprüche 3 bis 6, wobei die Haltestangen (PBM, DBM) des anpassbaren Teils (PC) aus einem metallischen Werkstoff gefertigt sind.

8. Befestigungsvorrichtung (DA) nach einem der vorstehenden Ansprüche, wobei der anpassbare Teil ausgewählt ist aus: einem Tuch, einer mit einem vollen Kunststoffwerkstoff realisierten Folie oder einem mit einem vollen Kunststoffwerkstoff, beispielsweise Persenning, bedeckten Tuch.

9. Anordnung (ENS), die einen Behälter (RES), der beispielsweise imstande ist, Benzin zu enthalten, eine Vielzahl von selbstdichtenden fugendichten Platten (PAO) und eine Befestigungsvorrichtung (DA) nach einem der vorstehenden Ansprüche umfasst, wobei die Platten anhand der Befestigungsvorrichtung an einer Außenwand (PEXT) des Behälters montiert sind.

10. Verfahren zum Montieren einer Anordnung (ENS) nach dem vorstehenden Anspruch, wobei das Verfahren die folgenden Schritte umfasst:
a) Platzieren der selbstdichtenden Platten (PAO) fugendicht an dem Behälter (RES),
b) Montieren der Befestigungsvorrichtung (DA) um die selbstdichtenden Platten (PAO) herum,
c) Spannen der Gurte (S1, S2, S3) der Befestigungsvorrichtung (DA), um die selbstdichtenden Platen an der Außenwand des Behälters festzuhalten.

## Claims

1. An attachment device (DA) for attaching self-sealing plates to an external wall of a tank, said attachment device comprising:
- a plurality of straps (S1, S2, S3) each comprising a first strap end (PES1) and a
second strap end (DES1, DES2, DES3) opposite the first strap end, **characterized in that** said device comprises:
- a part (PC) shapeable to the shape of said self-sealing plates, said part comprising a first end (PE) and a second end (DE) opposite the first end,
- a first connection means (MAR1) between the straps (S1, S2, S3) and the shapeable part (PC), said first connection means (MAR1) connecting the different first strap ends to the first end of the shapeable part (PC); and
- a second connection means (MAR2) between the straps (S1, S2, S3) and the shapeable part (PC), said second connection means (MAR2) connecting the different second strap ends to the second end of the shapeable part (PC).

2. The attachment device as claimed in claim 1, wherein each connection means between the straps (S1, S2, S3) and the shapeable part (PC) is in the form of a bar (BAR) extending along the entire end of the shapeable part and on which the different strap ends are mounted.

3. The attachment device as claimed in claim 1, wherein:
- the first connection means (MAR1) comprises a first holding bar (PBM) for said shapeable part (PC) and a first connecting bar (PBC) for the straps (S1, S2, S3) on which all the first strap ends are mounted and, a first plate (PLQ) equipped with two longitudinal guides (GL11, GL12) parallel to each other, a first longitudinal guide (GL11) of the first plate receiving the first holding bar (PBM) for said shapeable part (PC) and a second longitudinal guide (GL12) of the first plate (PLQ) receiving the first connecting bar (PBC) of said straps (51, S2, S3), and
- the second connection means (MAR2) comprises a second holding bar (DBM) for said shapeable part (PC), a second connecting bar (DBC) for the straps (S1, S2, S3) on which all the second strap ends are mounted and a second plate (DLQ) also equipped with two longitudinal guides (GL21, GL22) parallel to each other, a first longitudinal guide (GL21) of the second plate (DLQ) receiving the second holding bar (DBM) for said shapeable part and a second longitudinal guide (GL22) of the second plate receiving the second connecting bar (DBC) of said straps (S1, S2, S3).

4. The attachment device (DA) according to claim 3, wherein the holding bars (PBM, DBM), the connecting bars (PBC, DBC) and the longitudinal guides (GL11, GL12; GL21, GL22) all have a circular cross-section.

5. The attachment device (DA) according to one of claims 3 or 4, wherein the connecting bars (PBC, DBC) of the straps are made of a metallic material.

6. The attachment device (DA) according to one of claims 3 to 5, wherein the plates (PLQ, DLQ) are made of a metallic material.

7. The attachment device (DA) according to one of claims 3 to 6, wherein the holding bars (PBM, DBM) of the shapeable part (PC) are made of a metallic material.

8. The attachment device (DA) according to one of the preceding claims, wherein said shapeable part is selected from: a canvas, a film made from a solid plastic material or a canvas covered with a solid plastic material, for example tarpaulin.

9. An assembly (ENS) comprising a tank (RES), for example suitable for containing petrol, a plurality of contiguous self-sealing plates (PAO) and an attachment device (DA) according to one of the preceding claims, said plates being mounted against an external wall (PEXT) of the tank by means of said attachment device.

10. A method for mounting an assembly (ENS) according to the preceding claim, said method comprising the following steps:
a) placing contiguously the self-sealing plates (PAO) against the tank (RES),
b) mounting the attachment device (DA) around said self-sealing plates (PAO),
c) tightening the straps (S1, S2, S3) of the attachment device (DA) so as to hold the self-sealing plates against the external wall of the tank.
